# FASCICULE DE BREVET EUROPEEN

(11) **EP 4 330 184 B1**
(45) Date de publication et mention de la délivrance du brevet: **12.02.2025**
(21) Numéro de dépôt: 22735554.2
(22) Date de dépôt: 08.06.2022
(51) Int. Cl.: C01B 3/00, C01B 3/04

(54) **PROCÉDÉ DE SYNTHÈSE D'UN LIQUIDE ORGANIQUE PORTEUR D'HYDROGÈNE (LOHC) CHARGÉ EN HYDROGÈNE UTILISANT DE L'HYDROGÈNE PRODUIT À PARTIR D'UN DIGESTAT DE MÉTHANISATION**
VERFAHREN ZUR SYNTHESE EINES MIT WASSERSTOFF BELADENEN FLÜSSIGEN ORGANISCHEN WASSERSTOFFTRÄGERS (LOHC) UNTER VERWENDUNG VON AUS EINEM METHANISIERUNGSAUFSCHLUSS ERZEUGTEM WASSERSTOFF
METHOD FOR SYNTHESISING A LIQUID ORGANIC HYDROGEN CARRIER (LOHC) LOADED WITH HYDROGEN USING HYDROGEN PRODUCED FROM A METHANISATION DIGESTATE

(30) Priorité: 14.06.2021 FR 2106270
(43) Date de publication de la demande: 06.03.2024
(73) Titulaire: Commissariat à l'Energie Atomique et aux Energies Alternatives, 75015 Paris (FR)
(72) Inventeur: LETURCQ, Gilles, 84850 Camaret-Sur-Aigues (FR); DELAHAYE, Thibaud, 30330 Tresques (FR)
(74) Mandataire: Brevalex
(86) Numéro de dépôt international: PCT/FR2022/051090
(87) Numéro de publication internationale: WO 2022/263748

(56) Documents cités:
- WO-A2-2007/140441
- US-A1- 2016 061 383
- JORSCHICK H. ET AL: "Hydrogenation of aromatic and heteroaromatic compounds - a key process for future logistics of green hydrogen using liquid organic hydrogen carrier systems", SUSTAINABLE ENERGY & FUELS, vol. 5, no. 5, 9 March 2021 (2021-03-09), pages 1311 - 1346, XP055895148, DOI: 10.1039/D0SE01369B
- LEE SANGHUN ET AL: "Connected evaluation of polymer electrolyte membrane fuel cell with dehydrogenation reactor of liquid organic hydrogen carrier", INTERNATIONAL JOURNAL OF HYDROGEN ENERGY, ELSEVIER, AMSTERDAM, NL, vol. 45, no. 24, 12 April 2020 (2020-04-12), pages 13398 - 13405, XP086144040, ISSN: 0360-3199, [retrieved on 20200412], DOI: 10.1016/J.IJHYDENE.2020.02.129

## Description

### DOMAINE TECHNIQUE

L'invention se rapporte au domaine de la production, du stockage et du transport de l'hydrogène.

Plus spécifiquement, elle se rapporte à un procédé de synthèse d'un liquide organique porteur d'hydrogène, ou LOHC (pour *Liquid Organic Hydrogen Carrier* en langue anglaise), chargé en hydrogène dans lequel un digestat de méthanisation est utilisé comme source d'hydrogène.

Elle se rapporte également à un procédé de valorisation de déchets organiques ainsi qu'à un procédé de production d'hydrogène qui mettent en œuvre ce procédé de synthèse.

### ÉTAT DE LA TECHNIQUE ANTÉRIEURE

De par sa forte densité énergétique massique (33 kWh/kg) et sa capacité à être oxydé en présence d'oxygène sous forme d'eau pure sans dégagement de CO₂, l'hydrogène est considéré comme un vecteur d'énergie de poids pour mener à bien la transition énergétique, notamment en venant en substitution aux combustibles fossiles.

Si l'hydrogène est susceptible d'être utilisé comme réactif dans les piles à combustible pour produire de l'électricité, sa première destination reste actuellement l'industrie. En effet, 75 millions de tonnes sont consommées annuellement par l'industrie chimique dont près de 45 % pour le raffinage du pétrole.

À ce jour, le vaporeformage d'hydrocarbures, principalement du méthane, est le procédé de production d'hydrogène le plus utilisé pour alimenter l'industrie en hydrogène car il est de loin le plus économique. Le vaporeformage consiste à faire réagir en température et en présence de catalyseurs le méthane avec de l'eau pour produire un mélange d'H₂, de CO₂, de CO et d'eau. En sortie de vaporéacteur, l'hydrogène est séparé du CO₂ et d'un mélange en excès de CO, de méthane et de vapeur d'eau (appelé syngas) qui est utilisé comme combustible pour fournir la chaleur nécessaire au vaporeformage.

Cependant, pour chaque tonne d'hydrogène produite par vaporeformage, environ 10 tonnes de CO₂ sont émises et généralement relâchées dans l'atmosphère.

Des procédés de production d'hydrogène limitant, voire supprimant, les émissions de gaz à effet de serre et, notamment, de CO₂ sont donc à l'étude pour compléter sa production par vaporeformage voire progressivement s'y substituer.

Parmi ces procédés, l'électrolyse de l'eau, qui consiste à décomposer l'eau en oxygène et hydrogène avec un courant électrique (qui, idéalement, doit lui-même être issu d'une filière de production d'électricité à faibles émissions de gaz à effet de serre telle que la filière nucléaire, l'éolien ou le solaire), représente une technologie de choix.

Deux principaux types d'électrolyse sont considérés avec, d'une part, les procédés dits « basses températures » qui reposent sur l'emploi de membranes polymères conductrices protoniques (appelées PEM pour *Proton Exchange Membrane* en langue anglaise) et, d'autre part, les procédés dits « hautes températures » qui reposent sur l'emploi de membranes céramiques conductrices anioniques ou protoniques dans des systèmes SOEC (pour *Solid Oxide Electrolysis Cell* en langue anglaise).

Toutefois, dans la perspective de démocratiser l'usage de l'hydrogène dans des domaines industriels autres que ceux de la pétrochimie ainsi que dans le secteur des transports et de l'habitat, il existe, au-delà de sa production à faible empreinte carbone, deux verrous technologiques à lever, à savoir son stockage et son transport.

En effet, compte-tenu de sa très faible densité massique, le stockage et le transport de l'hydrogène passent actuellement soit par sa liquéfaction à pression atmosphérique mais à une température extrêmement basse (-253 °C) soit par sa compression à très haute pression (70 MPa) avec, dans les deux cas, la nécessité d'une maîtrise des risques liés à sa propension à fuir en raison de sa petite taille, à son inflammabilité, à sa faculté à détoner et à son action délétère sur les métaux et alliages entrant dans la constitution des équipements dans lesquels il est confiné.

C'est la raison pour laquelle la recherche s'oriente aujourd'hui vers le développement de LOHCs.

Les LOHCs sont des composés organiques liquides ou semi-solides à température ambiante qui peuvent être alternativement chargés et déchargés en hydrogène *via* des réactions catalytiques d'hydrogénation et de déshydrogénation. Les LOHCs ont une densité de stockage d'hydrogène élevée et permettent de transporter l'hydrogène de manière sûre.

Des exemples typiques de LOHCs sont des hydrocarbures aromatiques comme le toluène et le naphtalène qui, par hydrogénation, donnent le méthylcyclohexane et la décaline. Ces derniers peuvent ensuite être conditionnés pour être stockés et/ou transportés jusqu'au lieu où ils seront utilisés pour produire de l'hydrogène par déshydrogénation catalytique. Des processus d'hydrogénation et de déshydrogénation sur plusieurs cycles peuvent ainsi être réalisés avec ces composés - comme illustré ci-après pour le couple toluène/méthylcyclohexane - sans perte notable de rendement.

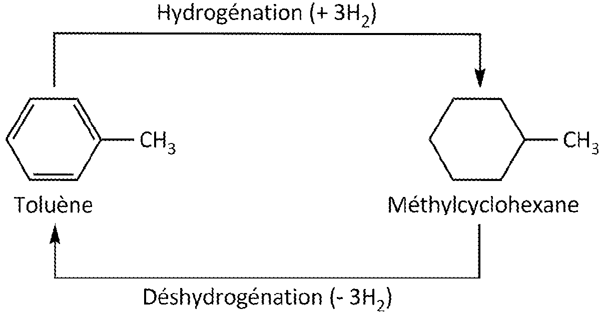

Pour une mise au point sur les récents développements réalisés en matière de LOHCs, le lecteur est invité à se référer à l'article aux noms de Purna Chandra Rao et Minyoung Yoon publié dans Energies 2020, 13(22), 1-23).

Si les LOHCs représentent manifestement une option de stockage et de transport de l'hydrogène très intéressante, leur intégration dans une stratégie de transition énergétique et écologique passe par la possibilité de les hydrogéner avec de l'hydrogène issu d'une filière de production qui soit non seulement décarbonée mais également peu coûteuse. WO 2007/140441 A2 divulgue un procédé de production d'hydrogène comprenant l'obtention d'ammoniac gazeux à partir d'un digestat de méthanisation puis la dissociation de cet ammoniac gazeux en azote et hydrogène, ledit hydrogène étant stocké ou bien utilisé dans une pile à combustible.

### EXPOSÉ DE L'INVENTION

L'invention vise justement à apporter une solution à ces problèmes en proposant un procédé qui permet de synthétiser un LOHC chargé en hydrogène, noté Hₙ-LOHC, en utilisant de l'hydrogène produit à partir d'un digestat de méthanisation.

Ce procédé comprend au moins les étapes de :
a) production d'ammoniac gazeux à partir d'un digestat de méthanisation ;
b) division de l'ammoniac gazeux produit à l'étape a) en un premier et un deuxième flux ;
c) amination catalytique d'un liquide organique porteur d'hydrogène non chargé en hydrogène, noté H₀-LOHC, par réaction avec l'ammoniac gazeux du premier flux pour convertir le H₀-LOHC en un H₀-LOHC aminé et produire de l'hydrogène ;
d) dissociation catalytique de l'ammoniac gazeux du deuxième flux pour produire de l'hydrogène ; et
e) hydrogénation catalytique du H₀-LOHC aminé obtenu à l'étape c), par réaction avec l'hydrogène produit aux étapes c) et d), moyennant quoi on obtient le Hₙ-LOHC.

Ainsi, selon l'invention :
- de l'ammoniac gazeux (NH₃) est produit à partir d'un digestat de méthanisation dont on rappelle qu'il s'agit du résidu de la fermentation, ou digestion, anaérobie de déchets organiques (d'origine agricole, urbaine, industrielle ou autre),
- une partie de l'ammoniac gazeux ainsi produit est mise à profit pour aminer un LOHC non chargé en hydrogène, H₀-LOHC, tandis que
- l'autre partie de l'ammoniac gazeux est mise à profit pour produire de l'hydrogène utile pour la conversion du H₀-LOHC aminé en LOHC chargé en hydrogène, Hₙ-LOHC.

Il va de soi que les étapes c) et d) peuvent être réalisées simultanément ou successivement, auquel cas elles peuvent être réalisées dans n'importe quel ordre, c'est-à-dire que l'étape c) peut aussi bien être réalisée après l'étape d) qu'avant l'étape d).

Conformément à l'invention, le digestat de méthanisation est, de préférence, un digestat liquide, c'est-à-dire correspondant à la phase liquide que l'on obtient lorsque l'on soumet un digestat de méthanisation à une séparation de phases solide/liquide, par exemple au moyen d'une presse à vis, d'une presse-courroie, d'un filtre-presse ou d'une centrifugeuse.

À l'étape a), l'ammoniac gazeux est avantageusement produit par désorption - encore connue sous le nom anglais *stripping* - de l'azote ammoniacal (c'est-à-dire l'ensemble formé par l'ammoniac qui est sous forme moléculaire NH₃ et celui qui est sous forme ionisée NHₐ⁺) présent dans le digestat liquide de méthanisation.

Cette désorption est, de préférence, réalisée en faisant circuler le digestat liquide dans une colonne munie d'un garnissage du type anneaux de Raschig, anneaux de Pall, selles de Berl ou analogues, à contre-courant d'un gaz dit gaz de transfert qui est soit de l'azote soit un gaz essentiellement constitué d'azote tel que de l'air. Le gaz de transfert peut être préalablement chauffé, par exemple à une température de 50 °C-70 °C, de sorte à favoriser la désorption de l'azote ammoniacal.

En variante, la désorption peut également être réalisée par tirage sous vide (on parle alors de *stripping à* vide).

Quoi qu'il en soit, le procédé comprend avantageusement de plus une purification de l'ammoniac gazeux produit que l'on réalise, par exemple, au moyen d'un filtre à membrane.

Conformément à l'invention, le H₀-LOHC est typiquement un composé aromatique ou hétéroaromatique, monocyclique ou polycyclique, éventuellement substitué par un ou plusieurs groupes alkyles, aryles, hétéroaryles, arylalkyles ou hétéroarylalkyles, qui répond, de préférence, aux critères suivants :
- être apte à assurer un stockage de l'hydrogène entièrement réversible *via* des processus catalytiques ;
- présenter une stabilité thermique, une thermodynamique et des cinétiques d'hydrogénation/déshydrogénation favorables ;
- présenter un point de fusion suffisamment bas, idéalement inférieur à -30 °C, pour être liquide ou semi-liquide à la température ambiante (25 °C) et éviter ainsi d'avoir à recourir à un solvant pour le rendre liquide ou semi-liquide ;
- présenter un point d'ébullition élevé, idéalement supérieur à 300 °C, pour simplifier la purification de l'hydrogène qui sera produit lorsque le Hₙ-LOHC résultant de son hydrogénation sera soumis à une déshydrogénation ;
- être non toxique, non inflammable et non explosif dans les conditions ambiantes de température (25 °C) et de pression (100 kPa) ;
- être largement disponible et peu onéreux ; et
- pouvoir être transporté dans les conditions ambiantes de température et de pression à l'aide des infrastructures qui sont actuellement utilisées pour les combustibles liquides et semi-liquides (pipelines, camions-citernes, etc.).

Ainsi, il peut notamment s'agir :
- du toluène qui donne, par hydrogénation, le méthylcyclohexane,
- du 2-benzyltoluène ou du 4-benzyltoluène qui donnent respectivement, par hydrogénation, le perhydro-2-benzyltoluène et le perhydro-4-benzyltoluène,
- du 2,3-dibenzyltoluène ou du 2,4-dibenzyltoluène qui donnent respectivement, par hydrogénation, le perhydro-2,3-dibenzyltoluène et le perhydro-2,4-dibenzyltoluène,
- du naphtalène qui donne, par hydrogénation, la décaline,
- du N-éthylcarbazole qui donne, par hydrogénation, le perhydro-*N*-éthylcarbazole,
- de l'indole qui donne, par hydrogénation, le perhydroindole,
- du 1-méthylindole, du 2-méthylindole, du 3-méthylindole, du 4-méthylindole, du 5-méthylindole ou du 6-méthylindole qui donnent respectivement, après hydrogénation, le perhydro-1-méthylindole, le perhydro-2-méthylindole, le perhydro-3-méthylindole, le perhydro-4-méthylindole, le perhydro-5-méthylindole et le perhydro-6-méthylindole,
- du 1,2-diméthylindole, du 2,3-diméthylindole ou du 2,5-diméthylindole qui donnent respectivement, après hydrogénation, le perhydro-1,2-diméthylindole, le perhydro-2,3-diméthylindole et le perhydro-2,5-diméthylindole,
- du dibenzofurane qui donne, après hydrogénation, le perhydrobenzofurane,
- de la phénazine qui donne, après hydrogénation, la perhydrophénazine,
- de la 2-(N-méthylbenzyl)pyridine qui donne, après hydrogénation, la perhydro-2-(N-méthylbenzyl)pyridine, ou encore
- de la 4,4'-bipipéridine qui donne, après hydrogénation, la perhydro-4,4'-bipipéridine.

À l'étape c), l'amination catalytique du H₀-LOHC conduit à la formation d'un H₀-LOHC aminé et d'hydrogène selon la réaction :

H₀-LOHC + NH₃ ⇄ H₀-LOHC-NH₂ + H₂

qui dans le cas, par exemple, du toluène devient :

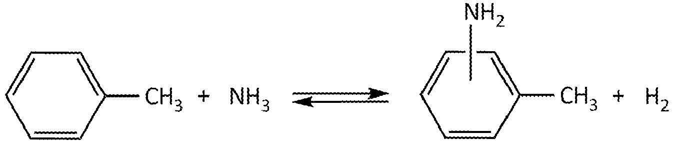

Il est à noter que cette réaction d'amination peut aboutir à la présence de plusieurs groupements NH₂ sur la même molécule de H₀-LOHC.

Cette amination est avantageusement réalisée dans un réacteur chauffé à une température qui est, de préférence, choisie en fonction du catalyseur utilisé mais qui est typiquement comprise entre 200°C et 800°C et, plus spécifiquement, entre 350 °C et 500 °C et sous une pression qui est typiquement comprise entre 0,1 MPa et 90 MPa et, plus spécifiquement, entre 1,5 MPa et 11 MPa. Le catalyseur est, par exemple, un composite céramique-métal, à base d'un oxyde métallique tel qu'un oxyde de zirconium, de nickel, de cobalt, d'aluminium, d'une terre rare (oxyde d'yttrium ou de cérium par exemple), et d'un ou plusieurs métaux actifs choisis parmi le nickel, le cuivre, le zinc, les métaux du groupe du platine (ruthénium, rhodium, palladium, iridium et platine), le vanadium, le titane, l'aluminium, de silicium et les actinides (uranium et thorium notamment).

Afin d'augmenter le rendement de l'amination du H₀-LOHC, il est possible de déplacer l'équilibre chimique de cette réaction vers la formation d'hydrogène en consommant une partie de l'hydrogène généré par cette amination, auquel cas l'amination est réalisée en présence d'un gaz oxydant tel que l'oxygène, le monoxyde de carbone, le dioxyde de carbone, le monoxyde d'azote, le dioxyde d'azote, le peroxyde d'hydrogène ou l'air.

Avantageusement, le procédé comprend de plus une purification de l'hydrogène produit par l'amination catalytique du H₀-LOHC, que l'on réalise, par exemple, au moyen d'un filtre à membrane.

À l'étape d), la dissociation catalytique de l'ammoniac gazeux conduit à la formation d'azote et d'hydrogène selon la réaction :

2NH₃ → N_{2 +} 3H₂

Cette dissociation est avantageusement réalisée dans un réacteur chauffé à une température qui est, de préférence, choisie en fonction du catalyseur utilisé mais qui est typiquement comprise entre 450°C et 800 °C et, plus spécifiquement, entre 550 °C et 700 °C. Le catalyseur est, par exemple, un composite céramique-métal comprenant un métal actif tel que le ruthénium, le nickel ou le cuivre, et un oxyde tel que l'alumine, la magnésie ou encore un oxyde de terre rare comme la cérine.

Là également, le procédé comprend avantageusement de plus une purification de l'hydrogène produit par la dissociation catalytique de l'ammoniac gazeux, que l'on réalise, par exemple, au moyen d'un filtre à membrane.

Quel que soit le H₀-LOHC aminé que l'on souhaite hydrogéner, son hydrogénation est typiquement réalisée avec une haute pression d'hydrogène, de préférence comprise entre 5 MPa et 10 MPa. Comme la réaction est exothermique et libère donc de la chaleur, le réacteur dans lequel est réalisée l'hydrogénation atteint typiquement une température entre 100°C et 200°C. Ces conditions peuvent, bien entendu, varier en fonction du H₀-LOHC aminé et du catalyseur utilisés. Le catalyseur est, par exemple, un composite céramique-métal comprenant un métal actif tel que le ruthénium, le nickel ou le cobalt, et un oxyde tel que l'alumine, la zircone ou un oxyde de terre rare comme la cérine.

La pression d'hydrogène est avantageusement contrôlée afin de se limiter à la réaction d'hydrogénation sans aller jusqu'à une hydrogénolyse qui conduirait au départ du ou des groupements NH₂.

Conformément à l'invention, le réacteur dans lequel est réalisée la dissociation catalytique de l'ammoniac gazeux et, le cas échéant, celui dans lequel est réalisée l'amination catalytique du H₀-LOHC sont avantageusement chauffés par la chaleur et/ou l'électricité produite(s) à partir d'un biogaz de méthanisation. Il en est également avantageusement de même pour le gaz de transfert servant à la désorption de l'azote ammoniacal si ce gaz de transfert est préalablement chauffé.

Ainsi, le procédé de synthèse d'un Hₙ-LOHC tel que précédemment défini peut avantageusement s'inscrire dans un procédé de valorisation de déchets organiques, lequel comprend au moins les étapes de :
- méthanisation des déchets organiques pour produire un digestat de méthanisation et un biogaz ;
- synthèse d'un Hₙ-LOHC à partir du digestat de méthanisation par la mise en œuvre dudit procédé de synthèse ; et
- production de chaleur et/ou d'électricité à partir du biogaz.

L'invention a donc aussi pour objet un tel procédé de valorisation de déchets organiques.

L'invention a encore pour objet un procédé de production d'hydrogène, qui comprend au moins les étapes de :
- synthèse d'un Hₙ-LOHC par la mise en œuvre du procédé de synthèse d'un Hₙ-LOHC tel que précédemment défini ;
- conditionnement du Hₙ-LOHC pour son stockage et/ou son transport ; et
- déshydrogénation catalytique du Hₙ-LOHC ainsi conditionné.

Comme connu en soi :
- le conditionnement du Hₙ-LOHC peut être réalisé dans le même type de réservoirs que ceux employés pour conditionner les hydrocarbures, à température ambiante et pression atmosphérique ; tandis que
- la déshydrogénation catalytique du Hₙ-LOHC peut être réalisée dans un réacteur chauffé à une température qui est, de préférence, choisie en fonction du catalyseur et du Hₙ-LOHC utilisés mais qui est typiquement comprise entre 100 °C et 350 °C et, plus spécifiquement, entre 150 °C et 300°C. La réaction s'effectue typiquement à pression atmosphérique. Le catalyseur est, par exemple, un composite céramique-métal comprenant un platinoïde tel que le platine ou le palladium, et un oxyde tel que l'alumine.

D'autres caractéristiques et avantages de l'invention apparaîtront à la lecture du complément de description qui suit et qui est donné en référence aux figures annexées.

Il va de soi que ce complément de description n'est donné qu'à titre d'illustration de l'objet de l'invention et ne constitue en aucun cas une limitation de cet objet.

### BRÈVE DESCRIPTION DES FIGURES

La figure 1 illustre schématiquement un mode de mise en œuvre préféré du procédé de synthèse d'un Hₙ-LOHC selon l'invention et de réalisation d'une installation conçue pour ce mode de mise en œuvre.
La figure 2 illustre schématiquement un mode de mise en œuvre préféré du procédé de valorisation de déchets organiques selon l'invention et de réalisation d'une installation conçue pour ce mode de mise en œuvre.

### EXPOSÉ DÉTAILLÉ D'UN MODE DE MISE EN ŒUVRE PRÉFÉRÉ

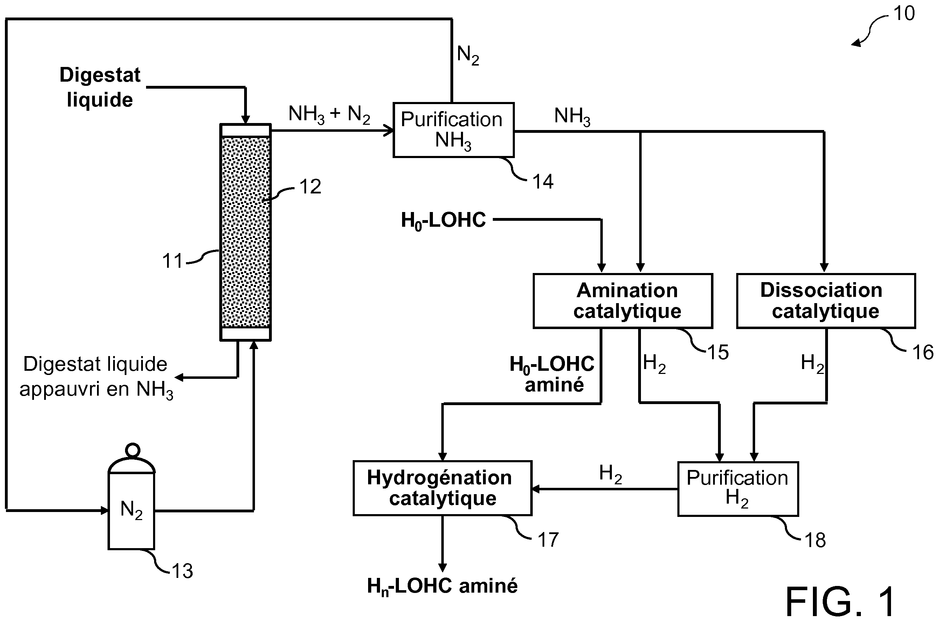

On se réfère à la figure 1 qui représente schématiquement un mode de mise en œuvre préféré du procédé de synthèse d'un Hₙ-LOHC selon l'invention et de réalisation d'une installation, référencée 10, conçue pour ce mode de mise en œuvre.

Dans ce mode de mise en œuvre, le procédé comprend :
1. la production d'ammoniac gazeux, NH₃, par désorption (ou *stripping*) de l'azote ammoniacal d'un digestat liquide ;
2. la purification de l'ammoniac gazeux ainsi produit et sa division en un premier et un deuxième flux ;
3. l'amination catalytique d'un H₀-LOHC au moyen de l'ammoniac gazeux du premier flux pour convertir ce H₀-LOHC en un H₀-LOHC aminé et produire de l'hydrogène ;
4. la dissociation catalytique de l'ammoniac gazeux du deuxième flux pour produire de l'hydrogène ;
5. la purification de l'hydrogène produit par l'amination catalytique du H₀-LOHC et par la dissociation catalytique de l'ammoniac ; et
6. l'hydrogénation catalytique du H₀-LOHC aminé au moyen de l'hydrogène ainsi purifié pour convertir ce H₀-LOHC aminé en un Hₙ-LOHC aminé.

Pour ce faire et comme visible sur la figure 1, l'installation 10 comprend une colonne 11 de désorption, qui est remplie d'un garnissage 12 tel que des anneaux de Raschig ou de Pall et dans laquelle est réalisée la production de l'ammoniac gazeux.

Le digestat liquide, qui est soumis à cette désorption, est issu de la séparation en une phase solide et une phase liquide d'un digestat de méthanisation.

Ce digestat liquide comprend essentiellement de l'azote dont de l'azote ammoniacal, du phosphore sous forme d'oxyde (P₂O₅), du potassium sous forme d'oxyde (K₂O), du calcium sous forme d'oxyde (CaO) et du magnésium, également sous forme d'oxyde (MgO), en concentrations variables selon les déchets organiques à partir desquels le digestat de méthanisation a été obtenu.

La colonne 11 est alimentée :
- en tête, par le digestat liquide *via* une pompe (non représentée sur la figure 1), et
- en pied, par un gaz de transfert qui peut être de l'azote ou un gaz essentiellement constitué d'azote comme l'air mais qui, dans le cas du mode de mise en œuvre du procédé illustré sur la figure 1, est de l'azote, lequel est injecté sous pression dans la colonne 11 à partir d'une source d'azote 13.

Le digestat liquide et l'azote circulent donc à contre-courant dans la colonne 11.

L'azote peut être chauffé préalablement à son entrée dans la colonne 11, par exemple à une température de 50 °C à 70 °C, pour favoriser la désorption de l'azote ammoniacal.

On récupère, en tête de la colonne 11, une phase gazeuse essentiellement formée d'ammoniac et d'azote et, en pied de la colonne 11, un digestat liquide appauvri en azote ammoniacal.

La phase gazeuse ainsi récupérée est dirigée vers un dispositif de purification 14, par exemple du type filtre à membrane, permettant de purifier l'ammoniac en le séparant de l'azote et des éventuels autres gaz générés par la désorption, tandis que le digestat appauvri en azote ammoniacal est éliminé du procédé en étant, par exemple, dirigé vers une unité de stockage (non représentée sur la figure 1) en vue d'un épandage ultérieur.

Comme visible sur la figure 1, l'azote sortant du dispositif de purification 14 peut, après avoir lui-même subi une éventuelle purification, être dirigé vers la source d'azote 13 en vue de sa réinjection dans la colonne 11. En variante, il peut également être éliminé du procédé pour sa réutilisation dans d'autres applications ou, plus simplement, sa libération dans l'atmosphère.

Quant à l'ammoniac sortant du dispositif de purification 14, il est divisé en deux flux : un premier flux qui est dirigé vers un réacteur 15 dévolu à l'amination catalytique du H₀-LOHC et qui est, donc, alimenté en ce H₀-LOHC, et un deuxième flux qui est dirigé vers un réacteur 16 dévolu à la dissociation catalytique de l'ammoniac.

Dans le réacteur 15, l'amination catalytique du H₀-LOHC est, par exemple, réalisée à une température comprise entre 350 °C et 500 °C et sous une pression comprise entre 1,5 MPa et 11 MPa, en utilisant un catalyseur de type Ni/CeO₂.

Comme précédemment indiqué, le rendement de l'amination catalytique du H₀-LOHC peut être augmenté en consommant une partie de l'hydrogène généré par cette amination, et ce, en alimentant le réacteur 15 en un gaz oxydant tel que l'oxygène, le monoxyde de carbone, le dioxyde de carbone, le monoxyde d'azote, le dioxyde d'azote, le peroxyde d'hydrogène ou l'air. Auquel cas, la partie de l'hydrogène généré par l'amination catalytique du H₀-LOHC qui n'est pas consommée dans le réacteur 15 est évacuée de ce réacteur au travers, par exemple, d'un filtre à membrane pour le séparer du gaz oxydant.

Qu'un gaz oxydant soit utilisé ou non pour l'amination catalytique du H₀-LOHC, l'hydrogène sortant du réacteur 15 est ensuite dirigé vers un dispositif de purification 18, par exemple du type filtre à membrane, tandis que le H₀-LOHC aminé est, lui, dirigé vers un réacteur 17 dévolu à son hydrogénation.

Parallèlement, est réalisée dans le réacteur 16 la dissociation catalytique de l'ammoniac gazeux du deuxième flux issu du dispositif de purification 14. Cette dissociation est, par exemple, effectuée à une température comprise entre 550 °C et 700 °C et en utilisant un catalyseur de type Ni/MgO.

L'hydrogène produit dans le réacteur 16 est ensuite dirigé vers le dispositif de purification 18 où il rejoint l'hydrogène ayant été évacué du réacteur 15.

Une fois purifié par le dispositif de purification 18, l'hydrogène est dirigé vers le réacteur 17 pour servir à l'hydrogénation catalytique du H₀-LOHC aminé.

Cette hydrogénation est, par exemple, réalisée avec une pression d'hydrogène comprise entre 5 MPa et 10 MPa et en utilisant un catalyseur de type Ru/Al₂O₃.

Le Hₙ-LOHC aminé produit dans le réacteur 17 est ensuite envoyé vers une zone dédiée à son conditionnement (non représentée sur la figure 1) pour son stockage et/ou son transport.

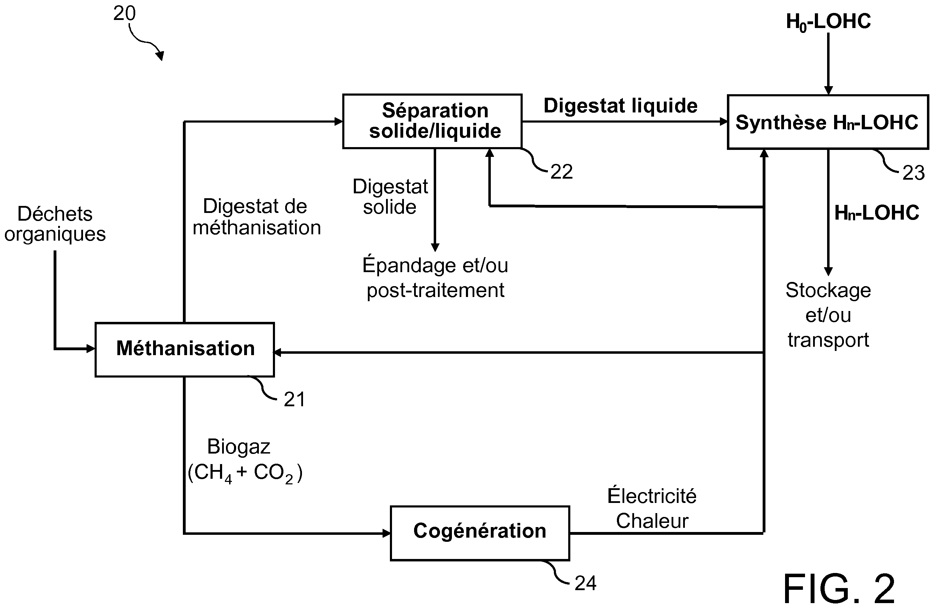

On se réfère à présent à la figure 2 qui représente schématiquement un mode de mise en œuvre préféré du procédé de valorisation de déchets organiques selon l'invention ainsi qu'une installation, référencée 20, conçue pour ce mode de mise en œuvre.

Dans ce mode de mise en œuvre, le procédé de valorisation de déchets organiques comprend :
1. la méthanisation des déchets organiques pour produire un digestat de méthanisation d'une part, et un biogaz d'autre part ;
2. la séparation du digestat de méthanisation en une phase solide, dite digestat solide, et une phase liquide, dite digestat liquide ;
3. la synthèse d'un Hₙ-LOHC à partir du digestat liquide par le procédé de synthèse d'un Hₙ-LOHC selon l'invention ; et
4. la cogénération, c'est-à-dire la production simultanée d'électricité et de chaleur, à partir du biogaz.

Pour ce faire et comme visible sur la figure 2, les déchets organiques, qui peuvent notamment être des déchets agricoles tels que du fumier bovin, du lisier porcin ou des résidus de céréales, des déchets urbains tels que des déchets ménagers ou des boues de stations d'épuration d'eaux usées, des déchets industriels tels que des déchets de l'industrie agroalimentaire, ou bien encore un mélange de déchets de différentes origines, sont introduits dans le méthaniseur, aussi appelé digesteur, d'une unité de méthanisation 21, dans lequel ils sont soumis à une fermentation anaérobie, typiquement à une température comprise entre 20°C et 60°C, qui conduit à la formation, d'une part, d'un produit pâteux auquel on donne le nom de digestat de méthanisation et, d'autre part, d'un biogaz qui est essentiellement constitué de CH₄ et de CO₂.

Le digestat de méthanisation, une fois évacué du méthaniseur 21, est dirigé vers une unité de séparation solide/liquide 22 dans laquelle il est séparé en un digestat solide et un digestat liquide, par exemple au moyen d'un ou plusieurs dispositifs du type presse à vis, presse-courroie, filtre-presse ou centrifugeuse.

Le digestat solide ainsi obtenu peut être envoyé vers une unité de stockage (non représentée sur la figure 2) en vue d'un épandage ultérieur et/ou vers une unité de post-traitement (non représentée sur la figure 2) du type unité de séchage ou de compostage.

Quant au digestat liquide, il est dirigé vers une installation 23 dévolue à la synthèse du Hₙ-LOHC, laquelle peut notamment être une installation du type de celle représentée sur la figure 1. Le Hₙ-LOHC ainsi synthétisé est ensuite dirigé vers une zone dédiée à son conditionnement (non représentée sur la figure 2) pour son stockage et/ou son transport.

Parallèlement, le biogaz produit dans le méthaniseur 21 est dirigé vers une unité de cogénération 24 comprenant, par exemple, une turbine à gaz couplée à un alternateur et à un récupérateur de chaleur.

Comme illustré sur la figure 2, l'électricité et/ou la chaleur ainsi produites peuvent notamment être utilisées pour le fonctionnement :
- de l'unité de méthanisation 21 et, en particulier, pour le chauffage du méthaniseur,
- de l'unité de séparation solide/liquide 22, et/ou
- de l'installation 23 dévolue à la synthèse du Hₙ-LOHC et, en particulier, pour le chauffage du gaz de transfert utilisé pour la désorption de l'azote ammoniacal si l'ammoniac gazeux est produit par désorption ainsi que pour le chauffage des réacteurs dans lesquels sont réalisées la dissociation catalytique de l'ammoniac gazeux et, le cas échéant, l'amination catalytique du H₀-LOHC.

On réalise ainsi une valorisation optimale des déchets organiques.

### RÉFÉRENCE CITÉE

Purna Chandra Rao et Minyoung Yoon, Energies 2020, 13(22), 1-23

## Revendications

1. Procédé de synthèse d'un liquide organique porteur d'hydrogène chargé en hydrogène, Hₙ-LOHC, comprenant au moins les étapes de :
a) production d'ammoniac gazeux à partir d'un digestat de méthanisation ;
b) division de l'ammoniac gazeux produit à l'étape a) en un premier et un deuxième flux ;
c) amination catalytique d'un liquide organique porteur d'hydrogène non chargé en hydrogène, H₀-LOHC, par réaction avec l'ammoniac gazeux du premier flux pour convertir le H₀-LOHC en un H₀-LOHC aminé et produire de l'hydrogène ;
d) dissociation catalytique de l'ammoniac gazeux du deuxième flux pour produire de l'hydrogène ; et
e) hydrogénation catalytique du H₀-LOHC aminé obtenu à l'étape c), par réaction avec l'hydrogène produit aux étapes c) et d), moyennant quoi on obtient le Hₙ-LOHC.

2. Procédé selon la revendication 1, dans lequel le digestat de méthanisation est un digestat liquide.

3. Procédé selon la revendication 2, dans lequel la production de l'ammoniac gazeux comprend une désorption de l'azote ammoniacal contenu dans le digestat liquide sous forme d'ammoniac gazeux.

4. Procédé selon la revendication 3, dans lequel la désorption comprend une circulation du digestat liquide dans une colonne à garnissage, à contre-courant d'azote ou d'un gaz essentiellement constitué d'azote.

5. Procédé selon l'une quelconque des revendications 1 à 4, qui comprend de plus une purification de l'ammoniac gazeux produit.

6. Procédé selon l'une quelconque des revendications 1 à 5, dans lequel la dissociation catalytique de l'ammoniac gazeux est réalisée dans un réacteur chauffé à une température comprise entre 450 °C et 800 °C.

7. Procédé selon l'une quelconque des revendications 1 à 6, qui comprend de plus une purification de l'hydrogène produit par la dissociation catalytique de l'ammoniac gazeux.

8. Procédé selon l'une quelconque des revendications 1 à 7, dans lequel le H₀-LOHC est un composé aromatique ou hétéroaromatique, monocyclique ou polycyclique, éventuellement substitué par un ou plusieurs groupes alkyles, aryles, hétéroaryles, arylalkyles ou hétéroarylalkyles.

9. Procédé selon la revendication 8, dans lequel le H₀-LOHC est le toluène, le 2-benzyltoluène, le 4-benzyltoluène, le 2,3-dibenzyltoluène, le 2,4-dibenzyltoluène, le naphtalène, le *N*-éthylcarbazole, l'indole, le 1-méthylindole, le 2-méthylindole, le 3-méthylindole, le 4-méthylindole, le 5-méthylindole, le 6-méthylindole, le 1,2-diméthylindole, le 2,3-diméthylindole, le 2,5-diméthylindole, le dibenzofurane, la phénazine, la 2-(N-méthylbenzyl)pyridine ou la 4,4'-bipipéridine.

10. Procédé selon l'une quelconque des revendications 1 à 9, dans lequel l'amination catalytique du H₀-LOHC est réalisée dans un réacteur chauffé à une température comprise entre 200 °C et 800 °C et sous une pression comprise entre 0,1 MPa et 90 MPa.

11. Procédé selon l'une quelconque des revendications 1 à 10, qui comprend de plus une purification de l'hydrogène produit par l'amination catalytique du H₀-LOHC.

12. Procédé selon l'une quelconque des revendications 1 à 11, dans lequel l'hydrogénation catalytique du H₀-LOHC aminé est réalisée avec une pression d'hydrogène comprise entre 5 MPa et 10 MPa.

13. Procédé selon l'une quelconque des revendications 6 ou 10, dans lequel le réacteur est chauffé par la chaleur et/ou l'électricité produite(s) à partir d'un biogaz de méthanisation.

14. Procédé de valorisation de déchets organiques, qui comprend au moins les étapes de :
- méthanisation des déchets organiques pour produire un digestat de méthanisation et un biogaz ;
- synthèse d'un liquide organique porteur d'hydrogène chargé en hydrogène, noté Hₙ-LOHC, à partir du digestat de méthanisation par la mise en œuvre d'un procédé selon l'une quelconque des revendications 1 à 13 ; et
- production de chaleur et/ou d'électricité à partir du biogaz.

15. Procédé de production d'hydrogène, qui comprend au moins les étapes de :
- synthèse d'un liquide organique porteur d'hydrogène chargé en hydrogène, noté Hₙ-LOHC, par la mise en œuvre d'un procédé selon l'une quelconque des revendications 1 à 13 ;
- conditionnement du Hₙ-LOHC pour son stockage et/ou son transport ; et
- déshydrogénation catalytique du Hₙ-LOHC ainsi conditionné.

## Patentansprüche

1. Verfahren zur Synthese einer mit Wasserstoff beladenen organischen Wasserstoffträgerflüssigkeit, Hₙ-LOHC, umfassend mindestens die Schritte:
a) Herstellen von gasförmigem Ammoniak aus Gärrückständen aus der Biogasanlage;
b) Aufteilen des in Schritt a) erzeugten Ammoniakgases in einen ersten und einen zweiten Strom;
c) katalytisches Aminieren einer nicht mit Wasserstoff beladenen organischen Wasserstoffträgerflüssigkeit, H₀-LOHC, durch Reaktion mit dem Ammoniakgas des ersten Stroms, um das H₀-LOHC in ein aminiertes H₀-LOHC umzuwandeln und Wasserstoff zu erzeugen;
d) katalytisches Aufspalten des Ammoniakgases aus dem zweiten Strom zur Erzeugung von Wasserstoff; und
e) katalytisches Hydrieren des in Schritt c) erhaltenen aminierten H₀-LOHC durch Umsetzen mit dem in den Schritten c) und d) erzeugten Wasserstoff, wodurch Hₙ-LOHC erhalten wird.

2. Verfahren nach Anspruch 1, wobei der Methanisierungsgärrest ein flüssiger Gärrest ist.

3. Verfahren nach Anspruch 2, wobei die Herstellung des Ammoniakgases eine Desorption des in dem flüssigen Gärrest enthaltenen Ammoniumstickstoffs in Form von Ammoniakgas umfasst.

4. Verfahren nach Anspruch 3, wobei die Desorption eine Zirkulation des flüssigen Gärrest in einer Füllkörperkolonne im Gegenstrom zu Stickstoff oder einem Gas, das im Wesentlichen aus Stickstoff besteht, umfasst.

5. Verfahren nach einem der Ansprüche 1 bis 4, das zusätzlich eine Reinigung des erzeugten gasförmigen Ammoniaks umfasst.

6. Verfahren nach einem der Ansprüche 1 bis 5, wobei die katalytische Spaltung von gasförmigem Ammoniak in einem Reaktor durchgeführt wird, der auf eine Temperatur zwischen 450 °C und 800 °C erhitzt wird.

7. Verfahren nach einem der Ansprüche 1 bis 6, das zusätzlich eine Reinigung des Wasserstoffs umfasst, der bei der katalytischen Spaltung von gasförmigem Ammoniak entsteht.

8. Verfahren nach einem der Ansprüche 1 bis 7, wobei das H₀-LOHC eine aromatische oder heteroaromatische, monocyclische oder polycyclische Verbindung ist, die gegebenenfalls mit einer oder mehreren Alkyl-, Aryl-, Heteroaryl-, Arylalkyl- oder Heteroarylalkylgruppen substituiert ist.

9. Verfahren nach Anspruch 8, wobei das H₀-LOHC Toluol, 2-Benzyltoluol, 4-Benzyltoluol, 2,3-Dibenzyltoluol, 2,4-Dibenzyltoluol, Naphthalin, N-Ethylcarbazol, Indol, 1-Methylindol, 2-Methylindol, 3-Methylindol, 4-Methylindol, 5-Methylindol, 6-Methylindol, 1,2-Dimethylindol, 2,3-Dimethylindol, 2,5-Dimethylindol, Dibenzofuran, Phenazin, 2-(N-Methylbenzyl)pyridin oder 4,4'-Bipiperidin ist.

10. Verfahren nach einem der Ansprüche 1 bis 9, wobei die katalytische Aminierung von H₀-LOHC in einem Reaktor durchgeführt wird, der auf eine Temperatur zwischen 200 °C und 800 °C und unter einem Druck zwischen 0,1 MPa und 90 MPa erhitzt wird.

11. Verfahren nach einem der Ansprüche 1 bis 10, das zusätzlich eine Reinigung des Wasserstoffs umfasst, der durch die katalytische Aminierung von H₀-LOHC erzeugt wird.

12. Verfahren nach einem der Ansprüche 1 bis 11, wobei die katalytische Hydrierung von aminiertem H₀-LOHC bei einem Wasserstoffdruck zwischen 5 MPa und 10 MPa durchgeführt wird.

13. Verfahren nach einem der Ansprüche 6 oder 10, wobei der Reaktor mit Wärme und/oder Strom beheizt wird, die/der aus Biogas aus der Methanisierung erzeugt wird/werden.

14. Verfahren zur Verwertung von organischen Abfällen, das mindestens die folgenden Schritte umfasst:
- Methanisierung von organischen Abfällen, um Gärrückstand und Biogas zu produzieren;
- Synthetisieren einer wasserstoffbeladenen organischen Trägerflüssigkeit, bezeichnet als Hₙ-LOHC, aus dem Gärrest der Methanisierung durch Ausführen eines Verfahrens nach einem der Ansprüche 1 bis 13; und
- Erzeugen von Wärme und/oder Strom aus Biogas.

15. Verfahren zur Herstellung von Wasserstoff, das mindestens die folgenden Schritte umfasst:
- Synthetisieren einer wasserstoffbeladenen organischen Trägerflüssigkeit, die mit Hₙ-LOHC bezeichnet wird, durch Ausführen eines Verfahrens nach einem der Ansprüche 1 bis 13;
- Konditionieren von Hₙ-LOHC für die Lagerung und/oder den Transport; und
- katalytisches Dehydrieren des so konditionierten Hₙ-LOHC.

## Claims

1. Synthesis process of a liquid organic hydrogen carrier charged with hydrogen, Hₙ-LOHC, comprising at least the steps of:
a) production of gaseous ammonia from a methanisation digestate;
b) division of the gaseous ammonia produced in step a) into a first and a second flow;
c) catalytic amination of a liquid organic hydrogen carrier not charged with hydrogen, H₀-LOHC, by reaction with the gaseous ammonia from the first flow to convert the H₀-LOHC into an aminated H₀-LOHC and produce hydrogen;
d) catalytic dissociation of the gaseous ammonia from the second flow to produce hydrogen; and
e) catalytic hydrogenation of the aminated H₀-LOHC obtained in step c), by reaction with the hydrogen produced in steps c) and d), whereby the Hₙ-LOHC is obtained.

2. Process according to claim 1, wherein the methanisation digestate is a liquid digestate.

3. Process according to claim 2, wherein the production of gaseous ammonia comprises a desorption of the ammoniacal nitrogen contained in the liquid digestate in the form of gaseous ammonia.

4. Process according to claim 3, wherein the desorption comprises a circulation of the liquid digestate in a packing column, against a flow of nitrogen or a gas essentially consisting of nitrogen.

5. Process according to any one of claims 1 to 4, further comprising a purification of the gaseous ammonia produced.

6. Process according to any one of claims 1 to 5, wherein the catalytic dissociation of the gaseous ammonia is carried out in a reactor heated to a temperature between 450°C and 800°C.

7. Process according to any one of claims 1 to 6, further comprising a purification of the hydrogen produced by the catalytic dissociation of gaseous ammonia.

8. Process according to any one of claims 1 to 7, wherein the H₀-LOHC is an aromatic or heteroaromatic, monocyclic or polycyclic, compound, optionally substituted by one or more alkyl, aryl, heteroaryl, arylalkyl or heteroarylalkyl groups.

9. Process according to claim 8, wherein the H₀-LOHC is toluene, 2-benzyltoluene, 4-benzyltoluene, 2,3-dibenzyltoluene, 2,4-dibenzyltoluene, naphthalene, N-ethylcarbazole, indole, 1-methylindole, 2-methylindole, 3-methylindole, 4-methylindole, 5-methylindole, 6-methylindole, 1,2-dimethylindole, 2,3-dimethylindole, 2,5-dimethylindole, dibenzofuran, phenazine, 2-(*N*-methylbenzyl)pyridine or 4,4'-bipiperidine.

10. Process according to any one of claims 1 to 9, wherein the catalytic amination of the H₀-LOHC is carried out in a reactor heated at a temperature between 200°C and 800°C and at a pressure between 0.1 MPa and 90 MPa.

11. Process according to any one of claims 1 to 10, further comprising a purification of the hydrogen produced by the catalytic amination of the H₀-LOHC.

12. Process according to any one of claims 1 to 11, wherein the catalytic hydrogenation of the aminated H₀-LOHC is carried out with a hydrogen pressure between 5 MPa and 10 MPa.

13. Process according to any one of claims 6 or 10, wherein the reactor is heated by heat and/or electricity produced from a methanisation biogas.

14. Process for recycling organic waste, comprising at least the steps of:
- methanisation of the organic waste to produce a methanisation digestate and a biogas;
- synthesis of a liquid organic hydrogen carrier charged with hydrogen, annotated Hₙ-LOHC, from the methanisation digestate by implementing a process according to any one of claims 1 to 13; and
- production of heat and/or electricity from the biogas.

15. Process for producing hydrogen, comprising at least the steps of:
- synthesis of a liquid organic hydrogen carrier charged with hydrogen, annotated Hₙ-LOHC, by implementing a process according to any one of claims 1 to 13;
- packaging the Hₙ-LOHC for storage and/or transport; and
- catalytic dehydrogenation of the Hₙ-LOHC thus packaged.
